# EUROPÄISCHE PATENTSCHRIFT

(11) **EP 3 438 589 B1**
(45) Veröffentlichungstag und Bekanntmachung des Hinweises auf die Patenterteilung: **05.01.2022**
(21) Anmeldenummer: 18185606.3
(22) Anmeldetag: 25.07.2018
(51) Int. Cl.: F27B 1/00, C03B 19/10, C04B 38/00, C04B 20/06

(54) **FALLROHROFEN ZUM ERHITZEN VON PARTIKELMATERIAL**
DOWNPIPE FURNACE FOR HEATING OF PARTICULATE MATERIAL
FOUR À TUBES DE DESCENTE DESTINÉ À CHAUFFER UNE MATIÈRE PARTICULAIRE

(30) Priorität: 01.08.2017 DE 102017213275
(43) Veröffentlichungstag der Anmeldung: 06.02.2019
(73) Patentinhaber: Veit Dennert KG Baustoffbetriebe, 96132 Schlüsselfeld (DE)
(72) Erfinder: Dennert, Frank, 96138 Burgebrach (DE); Dennert, Veit, 96120 Bischberg (DE)
(74) Vertreter: Hübner, Gerd

(56) Entgegenhaltungen:
- EP-B1- 2 697 181

## Beschreibung

Die vorliegende Erfindung nimmt die Priorität der deutschen Patentanmeldung DE 10 2017 213 275.2 in Anspruch.

Die Erfindung betrifft einen Fallrohrofen zum Erhitzen von Partikelmaterial und insbesondere zum Blähen von expandierfähigem Partikelmaterial, wie Perlit.

Die im Oberbegriff des Patentanspruches 1 angegebenen Merkmale geben die Grundkomponenten eines solchen Fallrohrofens an. Demnach ist ein Fallrohr mit einem Fallraum für das Partikelmaterial vorgesehen, das über eine am oberen Ende des Fallrohrs angeordnete Beschickungseinrichtung in das Fallrohr eingebracht wird. Am unteren Ende des Fallrohrs ist eine Entnahmeeinrichtung für das Partikelmaterial angeordnet. Das Fallrohr ist zumindest auf einer Teillänge mit einer Heizeinrichtung umgeben, durch die das den Fallraum durchlaufende Partikelmaterial durch Strahlungswärme erhitzbar ist.

Zum Hintergrund der Erfindung ist festzuhalten, dass bei bekannten Fallrohröfen das zu behandelnde Partikelmaterial mit einem Luftstrom durch den Ofen geblasen wird. Bei letzterem kann die Luft gleichzeitig aufgeheizt sein, wodurch das Material dann erhitzt wird. In aller Regel wird jedoch - meist elektrisch - ein aus Stahlmaterial bestehendes Fallrohr von außen aufgeheizt.

Bei der Verarbeitung von Perlit, das im Partikeldurchmesser stark variiert und bei dem insbesondere Feinstkörnungen von < 0,1 mm Bestandteil des Partikelgemenges sind, ist die Verweilzeit der Partikel im Ofen aufgrund der unterschiedlichen Größen und die durchmesserabhängige Wechselwirkung zwischen den auf die Partikel wirkenden Gravitationskräften mit dem sie umgebenden Luftmedium stark unterschiedlich. Dadurch besteht die Gefahr, dass zu lange im Fallrohr verweilende Partikel überbläht oder zu kurz verweilende Partikel zu wenig oder gar nicht gebläht sind.

Zur Lösung dieser Problematik schlägt die EP 2 697 181 B1 vor, über den Ofenschacht einen kleinen Unterdruck zu erzeugen, der bewirkt, dass das Perlitmaterial gemeinsam mit Prozessluft von einer zur Umgebung offenen Aufgabeöffnung durch den Ofenschacht gesaugt wird. Dadurch werden die Perlitpartikel mit vergleichsweise konstanter und gleicher Geschwindigkeit durch das Fallrohr bewegt. Gleichwohl erscheinen die Unterdruckbedingungen und Geschwindigkeitsverteilung der unterschiedlich großen Partikel verbesserungsbedürftig, insbesondere da der Fallrohrofen ausgangsseitig mit Kühlluft beaufschlagt wird, was zu einer deutlichen Beeinträchtigung der Unterdruckverhältnisse im Fallrohr führt. Die EP 2 708 517 A1 vom gleichen Anmelder offenbart im Übrigen denselben Fallrohrofen.

Aus der DE 2 130 194 A1 geht ein Blährohrofen für Perlit hervor, bei dem durch quer zur Fallrichtung angeordnete Düsen Druckluft eingeblasen werden kann, so dass der Perlit oberhalb einer Expandierzone gestaut und damit länger im Blährohr verbleibt.

Aus der EP 3 050 854 A1 ist eine Anlage zur Herstellung von Mikrohohlkugeln aus Glas bekannt, bei dem die Kugeln in einer rohrförmigen Brennkammer von unten eingeblasen und durch das Brenngas nach oben transportiert und dabei gleichzeitig expandiert werden. Die rohrförmige Brennkammer kann dabei mit einem doppelwandigen Mantel versehen sein, der eine Kühlung der Brennkammerwand ermöglicht und damit ein Anbacken des zu expandierenden Materials verhindert.

Bei allen bekannten Ofenvorrichtungen nach dem Stand der Technik, also auch bei denen mit luftstromunterstützter Führung der zu blähenden Partikel, besteht eine Wechselwirkung zwischen den Partikeln im Hinblick auf ihre Größe und der die Partikel tragenden oder fördernden Luft, was dazu führt, dass bei insbesondere stark variierenden Partikelgrößen die Verweilzeiten im Fallrohrofen unter Temperatureinfluss und damit die Blähergebnisse bei den einzelnen Partikeln stark variieren.

Der Erfindung liegt demzufolge die Aufgabe zugrunde, einen Fallrohrofen anzugeben, bei dem auch in seiner Größe stark variierendes Partikelmaterial gleichmäßig erhitzt, also insbesondere mit einer besseren Homogenität gebläht werden kann.

Diese Aufgabe wird durch die im Kennzeichnungsteil des Anspruches 1 angegebenen Merkmale gelöst. Demnach ist eine Evakuierungseinrichtung vorgesehen, die mit dem Fallraum des Fallrohrs verbunden ist, so dass das Partikelmaterial den Fallraum während des Erhitzens bei Unterdruckbedingungen mindestens eines Grobvakuums von < 300 mbar durchfällt. Ferner ist die Beschickungseinrichtung mit einer Anordnung mindestens eines druckdichten Vorratsbehälters versehen.

Aufgrund der Vakuumbedingungen im Fallraum wird die im Stand der Technik problematische Wechselwirkung zwischen den zu behandelnden Partikeln und den sie umgebenden Luftstrom oder -polster mindestens deutlich reduziert, so dass die Partikel mit einem deutlich gleichmäßigeren Geschwindigkeitsprofil durch den Fallraum durch die Erhitzungszone frei fallen. Dabei wird über die Strahlungshitze der durch die Heizeinrichtung aufgeheizten Wandung des Fallrohres das Partikelmaterial in bekannter Weise thermisch behandelt, also insbesondere gebläht.

Durch den zeitlich gleichmäßigen Durchlauf der Partikel werden alle Korngrößen mit einer stark vergleichmäßigten Zeit behandelt, so dass es kein Überblähen bei zu langer Verweilzeit im Ofen oder Nicht-/Schlecht-Blähen bei zu kurzer Verweilzeit im Ofen auftritt.

Durch das das Partikelmaterial umgebende Vakuum im Fallraum des Ofens wird ferner das Aufblähen der Partikel selbst unterstützt, wodurch insgesamt eine geringere thermische Energie zur Erzielung eines gleichen Bläherfolges benötigt wird.

Bevorzugte Ausführungsformen der Erfindung ergeben sich aus den abhängigen Ansprüchen. So ist eine günstige Möglichkeit für die Beschickung und Entnahme des Fallrohres unter Vakuumbedingungen die Verwendung von jeweils druckdicht verschließbaren Chargen-Vorratsbehältern bei der Beschickungs- und/oder Entnahmeeinrichtung, welche Chargen-Vorratsbehälter mit Hilfe der Evakuierungseinrichtung ebenfalls unter mindestens ein Grobvakuum setzbar sind. Damit wird quasi ein geschlossenes System von Vorratsbehältern auf der Beschickungsseite, Fallrohr und Chargen-Vorratsbehältern auf der Entnahmeseite geschaffen, das durch entsprechende Absperrklappen am Einfüllstutzen beziehungsweise Auslassstutzen der Chargen-Vorratsbehälter druckdicht abgesperrt werden kann.

Bei den vorstehend erörterten Weiterbildungen ist nur ein chargenweiser Betrieb des Fallrohrofens unter Vakuum möglich, was Kapazitätsbegrenzungen mit sich bringt.

Um diese zu beseitigen, kann gemäß einer weiteren bevorzugten Ausführungsform die Beschickungseinrichtung und Entnahmeeinrichtung jeweils paarweise vorhandene, zeitlich abwechselnd druckdicht verschließbare Chargen-Vorratsbehälter aufweisen, so dass durch wechselweises Beschicken des einen Chargen-Vorratsbehälters und Entleeren des anderen Chargen-Vorratsbehälters von Beschickungs- und Entnahmeeinrichtung unter Vakuumbedingungen ein quasi-kontinuierlicher Betrieb des Fallrohrofens erzielbar ist.

Für die Flexibilisierung der Druckverhältnisse in den Chargen-Vorratsbehältern und im Fallraum des Fallrohrofens können gemäß einer bevorzugten Weiterbildung die Absperrklappen dieser Anlagenteile selektiv angesteuert und unabhängig voneinander mit der Evakuierungseinrichtung verbunden werden.

Für eine zielgenaue Dosierung des Partikelmaterials in den Fallraum kann die Beschickungseinrichtung mit einer Dosiereinrichtung, insbesondere einer Zellenradschleuse, versehen sein.

Gemäß einer Weiterbildung der Erfindung ist der Entnahmeeinrichtung des Fallrohrofens eine Fördereinrichtung, beispielsweise in Form eines Förderbandes, zum Abtransport des von der Entnahmeeinrichtung abgegebenen Partikelmaterials nachgeordnet.

Während die vorstehend erörterten Weiterbildungen der Beschickungs- und Entnahmeeinrichtungen mit druckdicht verschließbaren Chargen-Vorratsbehältern arbeiten, um einen quasi-kontinuierlichen Betrieb zu ermöglichen, kann als Alternative am unteren Ende des Fallrohres als kombinierte Entnahmeeinrichtung zum kontinuierlichen Austrag des Partikelmaterials und als Evakuierungseinrichtung zu Beaufschlagung des Fallrohrs mit Unterdruck ein Ejektor vorgesehen sein. Es hat sich nämlich gezeigt, dass diese Art von Strahlpumpe für diesen Zweck überraschender Weise gut geeignet ist, obwohl die Art des zu fördernden Gutes in Form eines Partikelmaterials dies an sich nicht vermuten lässt.

In anlagentechnisch relativ einfacher Art kann dieser Ejektor mit einem entsprechend dimensionierten Luftgebläse betrieben werden.

Zur Kühlung des geblähten Partikelmaterials ist gemäß einer weiteren bevorzugten Ausführungsform der Erfindung am unteren Ende des Fallrohrs ein wassergekühlter Trichter angeordnet.

Insbesondere im Zusammenhang mit dem kontinuierlich arbeitenden Ejektor am unteren Ende des Fallrohrs ist eine bevorzugte Weiterbildung des erfindungsgemäßen Fallrohrofens an dessen oberem Ende durch einen ebenfalls kontinuierlich arbeitenden Schneckenförderer als Beschickungseinrichtung gebildet, der von einem trichterförmigen Vorratsbehälter versorgt werden kann. Dieser kann durch das von ihm bevorratete Partikelmaterial insbesondere wenn es sich dabei um ausreichend feines, pulverförmiges Material handelt - gegenüber der Umgebung ausreichend unterdruckdicht abgeschlossen werden, sodass die erfindungsgemäß vorgesehenen Unterdruckbedingungen im Fallrohr aufrechterhalten werden können und der Ofen dementsprechend mit den erfindungsgemäßen Vorteilen auch tatsächlich kontinuierlich betrieben werden kann.

Für groberes Partikelmaterial, beispielsweise ab einer Partikelgröße von etwa 0,05 mm bis 0,1 mm, kann zur Aufrechterhaltung ausreichender Unterdruckbedingungen der Vorratsbehälter mit einem Deckel geschlossen werden.

Zur Optimierung der Zuführung für das Partikelmaterial können der Schneckenförderer und/oder die Förderstrecke vom Vorratsbehälter zum Schneckenförderer zumindest auf einer Teillänge mit einer Temperiereinrichtung versehen sein. Letztere kann durch eine Kühlung, gegebenenfalls aber auch eine Heizung insbesondere zur Vorerwärmung des Partikelmaterials gebildet sein.

Eine besonders mit dem Schneckenförderer harmonierende Dosiereinrichtung ist durch einen Schütttrichter mit einem darin rotierend angetriebenen Dosierkonus am oberen Ende des Fallrohrs gebildet. Damit kann eine sehr gleichmäßige, ungestörte Zuführung von Partikelmaterial in den Fallraum des Fallrohres gewährleistet werden.

Zur Optimierung der Temperaturbeaufschlagung des Partikelmaterials, beispielsweise zur gezielten Beeinflussung der Blähverhältnisse etwa für Perlit-Material, kann die Heizeinrichtung entlang des Fallraums mit selektiv ansteuerbaren Heizmanschetten versehen sein, um so unterschiedlich heiße Temperierzonen entlang des Fallrohres zu bilden.

Zusätzlich können entlang des Fallraums selektiv ansteuerbare Temperierzonen, beispielsweise zum Kühlen des durchfallenden Partikelmaterials über einen bestimmten Fallhöhenbereich zugeordnet sein. Durch die Kühlung des Fallrohres an seiner Wandung kann beispielsweise ein Anbacken von Partikelmaterial daran zuverlässig verhindert werden.

Bevorzugte Unterdruck-Verhältnisse im Fallraum können durch ein Prozessfenster für den Unterdruck im Bereich von 300 mbar bis 100 mbar mbar angegeben werden.

Gemäß einer weiteren bevorzugten Ausführungsform kann das Fallrohr zumindest teilweise aus wärmestrahlungsdurchgängigem Glasmaterial bestehen. Dadurch wird das Fallrohr, insbesondere wenn es aus Quarzglas besteht, sehr temperaturstabil. Betriebstemperaturen bis zu 1200 °C und mehr sind möglich. Durch die Transparenz des Glasmaterials kann Strahlungshitze durch das Rohr transmittiert werden.

Gleichzeitig kann dann in einer besonders bevorzugten Ausführungsform das Fallrohr doppelwandig mit der inneren, aus dem wärmestrahlungsdurchgängigen Glasmaterial bestehenden Rohrwand und einer äußeren, diese mit Abstand umgebenden Rohrwand ausgebildet sein. Letztere kann vorzugsweise ebenfalls aus Glasmaterial bestehen. Damit ist das Fallrohr individuell in seinem Fallraum mit thermischer Energie durch Strahlungswärme zu beaufschlagen, gleichzeitig kann die Rohrwandung zum Fallraum hin, vorzugsweise durch eine Kühlung des zwischen innerer und äußerer Rohrwand ausgebildeten Abstandsspalts gekühlt werden. Damit kann ein Anbacken von Partikelmaterial an die Wand des Fallraumes wirkungsvoll verhindert werden. Ein weiterer Vorteil eines doppelwandigen Fallrohres ist die Möglichkeit, die Belastung des Glasinnenrohrs durch ein Teilvakuum zwischen den beiden Wandungen zu verringern. Dies führt dann analog einem "Thermoskannen-Effekt" auch zu einer verringerten Wärmeleitung vom Fallraum nach außen, so dass - sofern keine Kühlung benötigt wird - die thermische Behandlung des Partikelgutes im Fallraum energieeffizienter vorgenommen werden kann.

Weitere Merkmale, Einzelheiten und Vorteile der Erfindung ergeben sich aus der nachfolgenden Beschreibung zweier Ausführungsbeispiele anhand der beigefügten Zeichnungen. Diese zeigen
- **Fig. 1**: eine schematische Schnittdarstellung eines Fallrohrofens in einer ersten Ausführungsform, sowie
- **Fig. 2 und 3**: eine schematische Schnittdarstellung der Beschickungseinrichtung bzw. schematische Ansicht der Entnahmeeinrichtung eines Fallrohrofens in einer zweiten Ausführungsform.

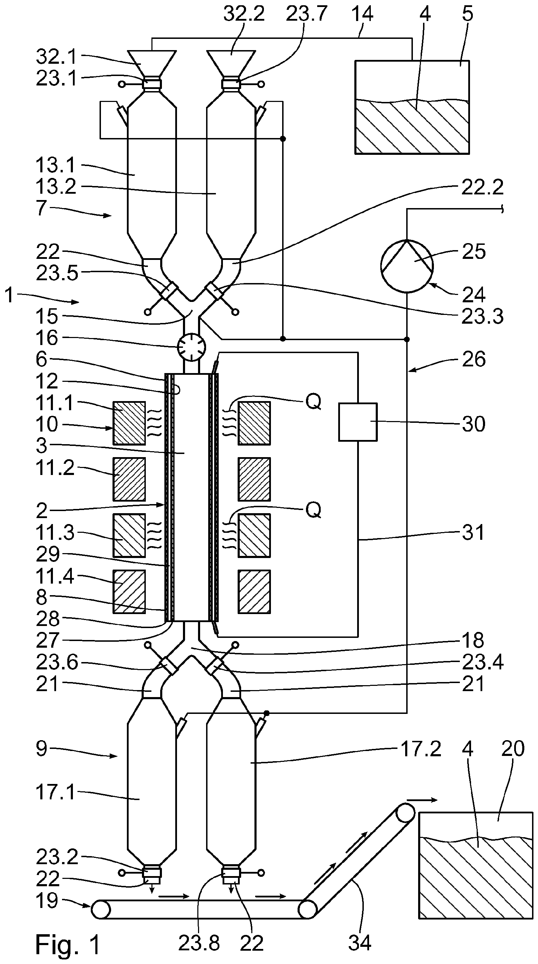

Der in Fig. 1 als Ganzes mit 1 bezeichnete Fallrohrofen weist als zentrales Teil ein vertikal angeordnetes Fallrohr 2 mit mehreren Metern Länge auf, das einen Fallraum 3 für zu behandelndes Partikelmaterial 4, wie beispielsweise expandierfähiger Perlit, der in einem Vorratssilo 5 bevorratet wird. Am oberen Ende 6 des Fallrohrs 2 ist eine als Ganzes mit 7 bezeichnete Beschickungseinrichtung angeordnet, am unteren Ende 8 des Fallrohrs 2 eine Entnahmeeinrichtung 9.

Um das Fallrohr 2 herum ist eine Heizeinrichtung 10 angeordnet, die aus einzelnen, ringförmigen Heizmanschetten 11.1 bis 11.4 besteht. Diese werden beispielsweise elektrisch beheizt und geben Strahlungswärme Q an die Wandung 12 des Fallrohrs 2 ab, wodurch der Fallraum 3 über die Fallhöhe variabel beheizbar ist. Die Heizmanschetten 11 sind einzeln ansteuerbar, sodass - wie in Fig. 1 angedeutet - einzelne Bereiche des Fallrohrs 2 weniger oder nicht beheizt werden.

Die Beschickungseinrichtung 7 weist zwei Chargen-Vorratsbehälter 13.1, 13.2 auf, die jeweils über eine entsprechende Förderleitung 14 vom Vorratssilo 5 her befüllt werden können. Die beiden Chargen-Vorratsbehälter 13.1, 13.2 stehen über eine Verzweigungsleitung 15 mit dem oberen Ende 6 des Fallrohrs 2 in Verbindung. Zur Dosierung des Partikelmaterials 4 aus den Vorratsbehältern 13.1, 13.2 ist in dieser Förderleitung 14 noch eine Dosiereinrichtung in Form einer Zellenradschleuse 16 eingesetzt.

Die Entnahmeeinrichtung 9 am unteren Ende 8 des Fallrohrs 2 weist wiederum zwei Chargen-Vorratsbehälter 17.1, 17.2 auf, die über eine Verzweigungsleitung 18 mit dem unteren Ende 8 des Fallrohrs 2 in Verbindung stehen. In diesen Chargen-Vorratsbehältern 17.1, 17.2 kann das im Fallrohr 2 behandelte Partikelmaterial 4 gesammelt werden. Diese Behälter können schließlich auf eine der Entnahmeeinrichtung 9 nachgeordnete Fördereinrichtung 19 in Form eines Förderbandes 34 entleert werden, das das behandelte Partikelmaterial 4 in ein Lagersilo 20 abgibt.

Die Chargen-Vorratsbehälter 13.1, 13.2, 17.1, 17.2 sind in ihren Einfülltrichtern 32, Einfüllstützen 21 und Auslassstutzen 22 jeweils mit einer druckdicht schließenden Absperrklappe 23 versehen, die durch eine nicht näher dargestellte Steuerung auf und zu steuerbar sind. Diese Absperrklappen 23 dienen auch zum Verschluss der Chargen-Vorratsbehälter 13.1, 13.2, 17.1, 17.2 gegen einen Durchtritt des darin befindlichen Partikelmaterials.

Die zentralen Bauteil des Fallrohrofens 1, nämlich der Fallraum 3 des Fallrohrs 2 sowie alle Chargen-Vorratsbehälter 13.1, 13.2, 17.1, 17.2 können mit Hilfe einer Evakuierungseinrichtung 24 in Unterdruckbedingungen gesetzt werden, die mindestens einem Grobvakuum, also < 300 mbar entsprechen. Dazu ist eine Vakuumpumpe 25 der Evakuierungseinrichtung 24 über entsprechend verzweigte, als Ganzes mit 26 bezeichnete Pumpleitungen mittelbar über die Verzweigungsleitung 15 und die Zellenradschleuse 16 an den Fallraum 3 sowie an die Chargen-Vorratsbehälter 13.1, 13.2, 17.1, 17.2 angeschlossen. Diese Volumina können so unter Vakuum gesetzt werden, was mit Hilfe der Absperrklappen 23 in noch näher zu beschreibender Weise mit einer zeitlichen Abfolge geschieht, die eine quasikontinuierliche Behandlung des Partikelmaterials 4 erlaubt.

Das Fallrohr 2 schließlich ist doppelwandig ausgebildet und mit einer inneren, aus wärmestrahlungsdurchgängigem Glasmaterial, wie Quarzglas, bestehenden Rohrwand 27 sowie einer äußeren, diese mit Abstand umgebenden Rohrwand 28 ebenfalls aus einem solchen Glasmaterial versehen. Der Abstandsspalt 29 zwischen den beiden Rohrwänden 27, 28 ist mit einer Kühleinrichtung 30 über entsprechende Kühlleitungen 31 verbunden, so dass das Fallrohr 2 kühlbar ist. Damit wird ein Anbacken von Partikelmaterial 4 - wie erwähnt - an die innere Rohrwand 27 verhindert. Gleichzeitig kann über die Strahlungswärme durchlässigen Rohrwände 27, 28 der Fallraum 3 erhitzt und das Partikelmaterial 4 entsprechend behandelt, also beispielsweise Perlit gebläht werden.

Ein Blähprozess mit der gezeigten Fallrohrofen-Anlage ist in seinem zeitlichen Fortgang wie folgt zu erläutern:
Ausgehend von einer nicht-evakuierten Anlage wird beispielsweise der Chargen-Vorratsbehälter 13.1 aus dem Vorratssilo 5 befüllt. Anschließend werden die Absperrklappen 23.1 am Einfülltrichter 32.1 des Chargen-Vorratsbehälters 13.1 und die Absperrklappe 23.2 am Ausgabestutzen 33.1 des Chargen-Vorratsbehälters 17.1, die Absperrklappe 23.3 am Auslassstutzen 22.2 des Chargen-Vorratsbehälters 13.2 und die Absperrklappe 23.4 am Einfüllstutzen 21.2 des Chargen-Vorratsbehälters 17.2 geschlossen. Dann können Chargen-Vorratsbehälter 13.1, Fallraum 3 und Chargen-Vorratsbehälter 17.1 durch die Evakuierungseinrichtung 24 evakuiert und die Heizeinrichtung 10 gegebenenfalls mit der Kühleinrichtung 30 aktiviert werden.

Über die Zellenradschleuse 16 wird zu blähendes Perlit-Partikelmaterial 4 durch das Fallrohr 2 dosiert und entsprechend gebläht. Dabei sind die Absperrklappen 23.5 am Auslassstutzen 22 des Chargen-Vorratsbehälters 13.1 und die Absperrklappe 23.6 am Einfüllstutzen 21 des Chargen-Vorratsbehälters 17.1 geöffnet. Dementsprechend erfolgt während dieser Produktionsperiode die Behandlung des Partikelmaterials 4 aus dem Chargen-Vorratsbehälter 13.1. Währenddessen kann bei geöffneter Absperrklappe 23.7 am Einfülltrichter 32.2 des zweiten Chargen-Vorratsbehälters 13.2 dessen Befüllung aus dem Vorratssilo 5 erfolgen. Nach Abschluss der Befüllung wird die Absperrklappe 23.7 am Einfülltrichter 32.2 des Vorratsbehälters 13.2 geschlossen. Damit kann während der Behandlung des Partikelmaterials aus dem ersten Behälter 13.1 auch die Evakuierung des zweiten Chargen-Vorratsbehälters 13.2 erfolgen.

Sobald der erste Vorratsbehälter 13.1 entleert, das Partikelmaterial 4 entsprechend gebläht und im ersten Chargen-Vorratsbehälter 17.1 gesammelt wurde, werden die Absperrklappen 23.5 und 23.6 geschlossen. Der zweite Chargen-Vorratsbehälter 17.2 wurde während der Befüllung des Chargen-Vorratsbehälters 13.2 ebenfalls mit Hilfe der Evakuierungseinrichtung 24 bei geschlossenen Absperrklappen 23.4, 23.8 evakuiert.

Sobald das Partikelmaterial 4 aus dem ersten Chargen-Vorratsbehälter 13.1 komplett entleert, im Fallraum 3 behandelt und im Chargen-Vorratsbehälter 17.1 gesammelt wurde, werden die beiden Absperrklappen 23.5 und 23.6 geschlossen. Die Absperrklappen 23.3, 23.4, die den beiden anderen Chargen-Vorratsbehältern 13.2, 17.2 zugeordnet sind, werden geöffnet, so dass nun das Partikelmaterial 4 aus diesem zweiten Chargen-Vorratsbehälter 13.2 in analoger Weise im Fallraum 3 behandelt und im zweiten Chargen-Vorratsbehälter 17.2 gesammelt werden kann.

Währenddessen wird zum einen die eingangsseitige Absperrklappe 23.1 des ersten Vorratsbehälters 13.1 geöffnet und dieser Vorratsbehälter kann wieder aus dem Vorratssilo 5 befüllt werden. Gleichzeitig wird die Klappe 23.2 am Auslassstutzen 22 des Chargen-Vorratsbehälters 17.1 geöffnet und das darin angesammelte, behandelte Partikelmaterial 4 auf die Fördereinrichtung 19 abgegeben. Deren Förderband 34 befördert das ausgegebene Partikelmaterial 4 in das Vorratssilo 20.

Sobald der zweite Chargen-Vorratsbehälter 13.2 entleert und das entsprechende Partikelmaterial nach seiner Behandlung im Fallraum 3 im zweiten Chargen-Vorratsbehälter 17.2 gesammelt wurde, können wieder die ersten Chargen-Vorratsbehälter 13.1, 17.1 nach Evakuierung aktiviert und die zweiten Vorratsbehälter 13.2, 17.2 durch Schließung der entsprechenden Absperrklappen 23.3, 23.4 von der Evakuierungseinrichtung 24 getrennt werden.

Letztere weist im Übrigen nicht näher dargestellte, selektiv steuerbare Ventile in den Pumpleitungen 26 auf, um die entsprechenden Teile des Fallrohrofens 1 zeitlich definiert unter Vakuum zu setzen.

Während das Partikelmaterial 4 aus dem ersten Chargen-Vorratsbehälter 13.1 in der oben beschriebenen Weise behandelt wird, wird der befüllte Chargen-Vorratsbehälter 17.2 über die geöffnete Absperrklappe 23.8 entleert, das Partikelmaterial 4 wird wieder über das Förderband 34 in das Vorratssilo 20 befördert. Gleichzeitig wird der zweite Chargen-Vorratsbehälter 13.2 wieder bei geöffneter Absperrklappe 23.7 mit Partikelmaterial 4 aus dem Vorratssilo 5 gefüllt und nach Schließen der Klappe 23.7 wieder evakuiert.

Auf die vorstehend erläuterte Weise werden die Vorratsbehälter 13.1, 17.1 und 13.2, 17.2 wechselweise in den Produktionsprozess eingebunden, so dass ein quasi-kontinuierlicher Blähprozess durchgeführt werden kann.

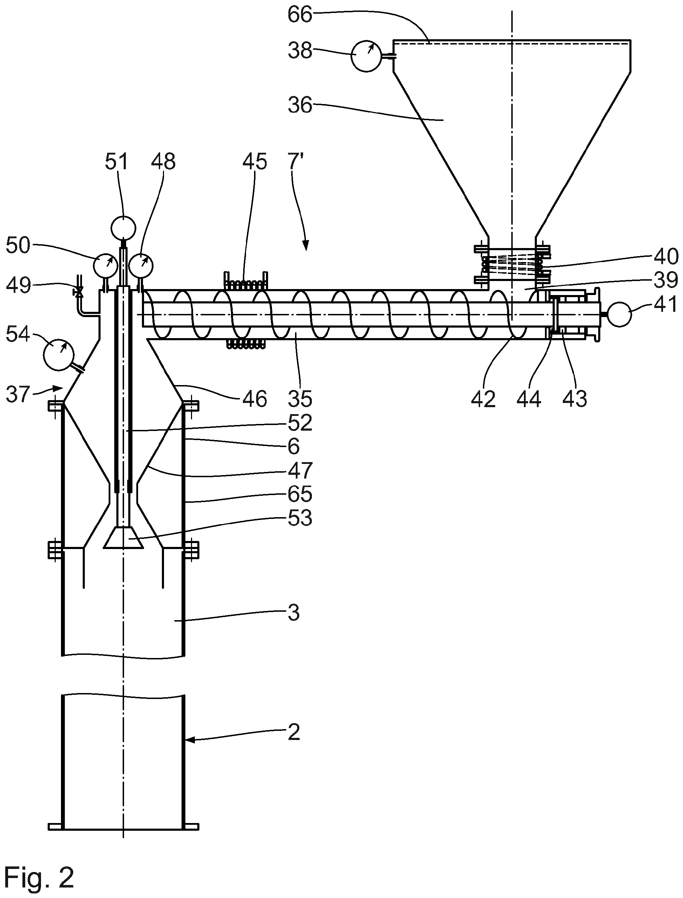

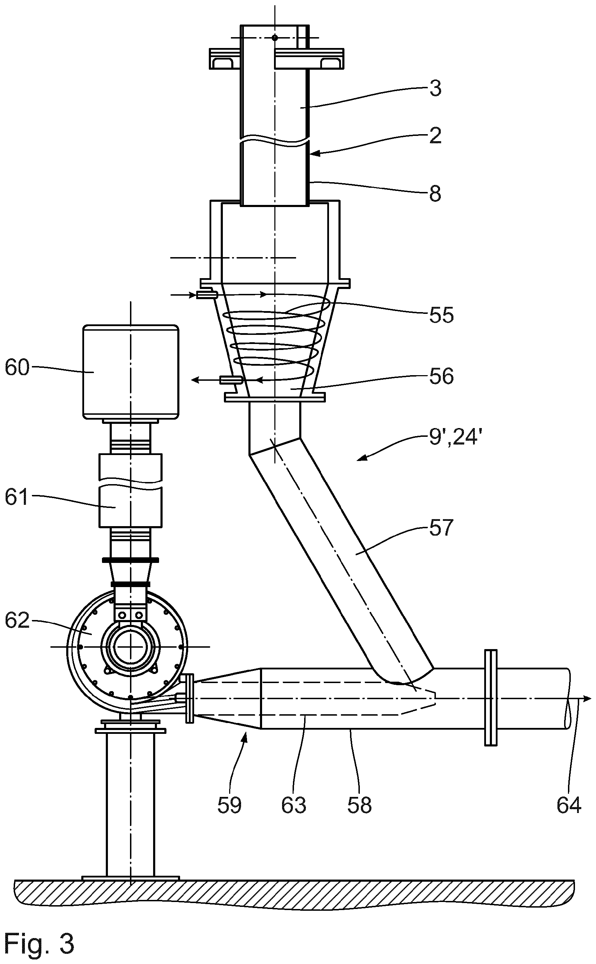

Für einen kontinuierlichen Blähprozess ist die in den Fig. 2 und 3 ausschnittsweise dargestellte Ausführungsform eines Fallrohrofens geeignet. Dieser ist im Bereich seines Fallrohrs 2 analog der Ausführungsform in Fig. 1 ausgebildet und bedarf in diesem Bereich also keiner nochmaligen Erörterung. Am oberen Ende 6 des Fallrohrs 2 ist nun die in Fig. 2 dargestellte, alternative Beschickungseinrichtung 7' angeordnet, deren Kernstück ein horizontale heranführender Schneckenförderer 35 ist. Dieser verbindet einen vakuumfähigen, trichterförmigen Vorratsbehälter 36, in dem zu blähendes Partikelmaterial bevorratet wird, mit einer als Ganzes mit 37 bezeichneten Dosiereinrichtung am oberen Ende 6 des Fallrohrs 2. Der Vorratsbehälter 36 ist mit einem Unterdruck-Messgerät 38 ausgestattet. Am unteren Ende des Vorratsbehälters 36 ist in der Auslaufstrecke 39 zum Schneckenförderer 35 hin eine Temperiereinrichtung 40 für das Partikelmaterial beispielsweise in Form eines umlaufenden Schlangenkühlers vorgesehen.

Der Schneckenförderer 35 ist auf seiner Antriebsseite mit einem Antriebsmotor 41 für seine Förderschnecke 42 ausgerüstet, die in einem Lager 43 drehbar gelagert ist. Der Förderraum des Schneckenförderers 35 ist zum Lager 43 hin durch eine feuerfeste Dichtung 44 gasdicht abgeschlossen. Auch der Schneckenförderer 35 ist mit einer Temperiereinrichtung 45 in Form einer Kühlschlange auf einer kurzen Teillänge vor seiner Mündung in die Dosiereinrichtung 37 versehen.

Diese Dosiereinrichtung 37 weist einen kegelförmigen, auf dem Kopf stehenden Haubendeckel 46 und einen auf dem Fallrohr 2 sitzenden Schütttrichter 47 in einem Leitrohr 65 auf. In das obere Ende des Haubendeckels 46 mündet der Schneckenförderer 35. Ferner sind dort ein Temperaturfühler 48, ein Belüftungsventil 49 und ein Wegsensor 50 für eine zentral im Haubendeckel 46 angeordnete, durch einen Motor 51 angetriebene Lagerwelle 52 für einen im Auslauf des Schütttrichters 47 angeordneten Dosierkonus 53 vorgesehen. Letzterer wird durch den Motor 51 in Rotationsbewegung versetzt, wodurch Partikelmaterial aus dem Schütttrichter 47 kontrolliert in den Fallraum 3 des Fallrohrs 2 eingebracht wird. Die Oberfläche des Dosierkonus 53 ist rau ausgeführt, was der Bildung von Materialbrücken dort entgegenwirkt. Schließlich sitzt an der Wandung des Haubendeckels 46 ein weiteres Unterdruck-Messgerät 54 zur Bestimmung des Unterdrucks in der Dosiereinrichtung 37.

Anhand von Fig. 3 ist die alternative Kombination einer Evakuierungs- 24' und Entnahmeeinrichtung 9' am unteren Ende 8 des Fallrohres 2 zu erläutern, an das sich hier ein mit einer Wasserkühlung 55 versehener Auslauftrichter 56 anschließt. Von dort wird das Partikelmaterial über ein 30° gegenüber der Vertikalen geneigt abgehendes Ablaufrohr 57 in ein horizontal verlaufendes Diffusorrohr 58 eines Ejektors 59 geführt. Dieser arbeitet mit Umgebungsluft als Treibmedium, die über einen Filter 60 und Schalldämpfer 61 einem Gebläse 62 zugeführt wird. Dadurch wird die Luft mit hoher Geschwindigkeit in die Mischdüse 63 des Ejektors 59 eingeblasen, wodurch nach der üblichen Wirkungsweise eines Ejektors im Ablaufrohr 57 ein erheblicher Unterdruck erzeugt sowie auf das Partikelmaterial dort ein Fördereffekt ausgeübt werden. Letzteres wird dadurch in Pfeilrichtung 64 zu einer geeigneten Speicherung oder direkten Weiterverarbeitung vom Fallrohrofen weg befördert.

Zu den Unterdruckbedingungen im Fallraum 3 des Ofens ist bei der Ausführungsform gemäß den Figuren 2 und 3 festzuhalten, dass durch den vakuumfähigen Vorratsbehälter 36 bei ausreichend feinem Partikelmaterial, also beispielsweise einem Pulvermaterial bis etwa 0,1 mm Partikelgröße, ein praktisch dichter Verschluss des Systems erzielt wird und damit kein Unterdruckabbau durch vom Vorratsbehälter 36 her durch den Schneckenförderer 35 nachströmende Luft erfolgt.

Bei gröberem Material kann der Vorratsbehälter 36 durch einen Deckel 66 verschlossen werden und der sich einstellende Unterdruck durch das Unterdruck-Messgerät 38 überwacht werden.

Unabhängig vom Partikelmaterial kann sich durch einen entsprechenden Betrieb der Anlage mit oder ohne Deckel 66 der durch den Ejektor 59 am unteren Ende 8 des Fallrohrs 2 erzeugte Unterdruck auch im Fallrohr 2 selbst halten, wodurch auch bei dieser Ofenvariante trotz des vollständig kontinuierlichen Betriebs die Vorzüge eines thermischen Blähens des Partikelmaterials unter Grobvakuum-Bedingungen erzielt werden.

## Patentansprüche

1. Fallrohrofen zum Erhitzen von Partikelmaterial, insbesondere zum Blähen von expandierfähigem Partikelmaterial, wie Perlit, umfassend
- ein Fallrohr (2) mit einem Fallraum (3) für das Partikelmaterial (4),
- eine am oberen Ende (6) des Fallrohrs (2) angeordnete Beschickungseinrichtung (7, 7') für das Partikelmaterial (4),
- eine am unteren Ende (8) des Fallrohrs (2) angeordnete Entnahmeeinrichtung (9, 9') für das Partikelmaterial (4), und
- eine das Fallrohr (2) zumindest auf einer Teillänge umgebende Heizeinrichtung (10), durch die das den Fallraum durchlaufende Partikelmaterial (4) durch Strahlungswärme (Q) erhitzbar ist, **gekennzeichnet durch**
- eine Evakuierungseinrichtung (24, 24'), die mit dem Fallraum (3) des Fallrohrs (2) verbunden ist, sodass das Partikelmaterial (4) den Fallraum (3) während des Erhitzens bei Unterdruckbedingungen mindestens eines Grobvakuums kleiner 300 mbar durchfällt, wobei die Beschickungseinrichtung (7; 7') mit einer Anordnung mindestens eines druckdichten Vorratsbehälters (13.1, 13.2; 36) versehen ist.

2. Fallrohrofen nach Anspruch 1, **dadurch gekennzeichnet, dass** die Beschickungseinrichtung (7) und/oder Entnahmeeinrichtung (9) jeweils einen druckdicht verschließbaren Chargen-Vorratsbehälter (13.1, 13.2; 17.1, 17.2) aufweisen, der/die mithilfe der Evakuierungseinrichtung (24) ebenfalls unter mindestens ein Grobvakuum setzbar ist.

3. Fallrohrofen nach Anspruch 2, **dadurch gekennzeichnet, dass** der oder die Chargen-Vorratsbehälter (13.1, 13.2; 17.1, 17.2) in ihrem Einfüllstutzen (21) und Auslassstutzen (22) mit druckdicht schließenden Absperrklappen (23) versehen sind.

4. Fallrohrofen nach Anspruch 2 oder 3, **dadurch gekennzeichnet, dass** die Beschickungseinrichtung (7) und Entnahmeeinrichtung (9) jeweils paarweise vorhandene, zeitlich abwechselnd druckdicht verschließbare Chargen-Vorratsbehälter (13.1, 13.2; 17.1, 17.2) derart aufweisen, das durch wechselweises Beschicken des einen Chargen-Vorratsbehälters (13.1, 13.2; 17.1, 17.2) und Entleeren des anderen Chargen-Vorratsbehälters (13.1, 13.2; 17.1, 17.2) von Beschickungs- und Entnahmeeinrichtung (7, 9) ein quasi-kontinuierlicher Betrieb des Fallrohrofens (1) erzielbar ist.

5. Fallrohrofen nach Anspruch 3 und 4, **dadurch gekennzeichnet, dass** durch eine selektive Ansteuerung der Absperrklappen (23) der Fallraum (3) des Fallrohrofens (1) sowie die Chargen-Vorratsbehälter (13.1, 13.2; 17.1, 17.2) unabhängig voneinander mit der Evakuierungseinrichtung (24) verbindbar sind.

6. Fallrohrofen nach einem der vorgenannten Ansprüche, **dadurch gekennzeichnet, dass** die Beschickungseinrichtung (7) mit einer Dosiereinrichtung, insbesondere einer Zellenradschleuse (16), versehen ist.

7. Fallrohrofen nach einem der vorgenannten Ansprüche, **dadurch gekennzeichnet, dass** der Entnahmeeinrichtung (9) eine Fördereinrichtung (19) zum Abtransport des von der Entnahmeeinrichtung (9) abgegebenen Partikelmaterials (4) nachgeordnet ist.

8. Fallrohrofen nach Anspruch 1, **gekennzeichnet durch** einen Ejektor (59) am unteren Ende des Fallrohrs (2) als kombinierte Entnahmeeinrichtung (9') zum kontinuierlichen Austrag des Partikelmaterials (4) und Evakuierungseinrichtung (24') zur Beaufschlagung des Fallrohrs (2) mit Unterdruck.

9. Fallrohrofen nach Anspruch 8, **dadurch gekennzeichnet, dass** der Ejektor (59) mit einem Luftgebläse (62) betrieben ist.

10. Fallrohrofen nach Anspruch 8 oder 9, **dadurch gekennzeichnet, dass** am unteren Ende (8) des Fallrohrs (2) eine wassergekühlter Trichter (56) angeordnet ist.

11. Fallrohrofen nach Anspruch 1 oder einem der Ansprüche im 8 bis 10, **dadurch gekennzeichnet, dass** die Beschickungseinrichtung (7') am oberen Ende (6) des Fallrohres (2) einen kontinuierlich arbeitenden Schneckenförderer (35) gebildet ist, der das Partikelmaterial (4) von einem Vorratsbehälter (36) in eine Dosiereinrichtung (37) am oberen Ende (6) des Fallrohrs (2) transportiert.

12. Fallrohrofen nach Anspruch 11, **dadurch gekennzeichnet, dass** der Vorratsbehälter (36) insbesondere für eine Verarbeitung groben Partikelmaterials durch einen Deckel (66) verschließbar ist.

13. Fallrohrofen nach Anspruch 11 oder 12, **dadurch gekennzeichnet, dass** der Schneckenförderer (35) und/oder die Förderstrecke vom Vorratsbehälter (36) zum Schneckenförderer (35) zumindest auf eine Teillänge mit einer Temperiereinrichtung (40, 45) versehen ist.

14. Fallrohrofen nach einem der Ansprüche 11 bis 13, **dadurch gekennzeichnet, dass** die Dosiereinrichtung (37) einen Schütttrichter (47) mit einem darin rotierend angetriebenen, vorzugsweise höhenverstellbaren Dosierkonus (53) aufweist.

15. Fallrohrofen nach einem der vorgenannten Ansprüche, **dadurch gekennzeichnet, dass** die Heizeinrichtung (10) entlang des Fallraums (3) mit selektiv ansteuerbaren Heizmanschetten (11) versehen ist.

16. Fallrohrofen nach einem der vorgenannten Ansprüche, **dadurch gekennzeichnet, dass** dem Fallrohr (2) entlang des Fallraums (3) selektiv ansteuerbare Temperierzonen zugeordnet sind.

17. Fallrohrofen nach einem der vorgenannten Ansprüche, **dadurch gekennzeichnet, dass** die Evakuierungseinrichtung (24, 24') derart ausgelegt ist, der Fallraum (3) und der gegebenenfalls vorhandene Chargen-Vorratsbehälter (13.1, 13.2; 17.1, 17.2) unter einen Unterdruck im Bereich von 300 mbar bis 100 mbar setzbar sind.

18. Fallrohrofen nach einem der vorgenannten Ansprüche, **dadurch gekennzeichnet, dass** das Fallrohr (2) zumindest teilweise aus wärmestrahlungsdurchgängigem Glasmaterial besteht.

19. Fallrohrofen nach Anspruch 17, **dadurch gekennzeichnet, dass** das Fallrohr (2) doppelwandig mit einer inneren, aus dem wärmestrahlungsdurchgängigen Glasmaterial bestehenden Rohrwand (27) und mit einer äußeren, diese mit Abstand umgebenden Rohrwand (28), vorzugsweise ebenfalls aus Glasmaterial, ausgebildet ist.

20. Fallrohrofen nach Anspruch 17 oder 18, **dadurch gekennzeichnet, dass** das Fallrohr (2), insbesondere durch Kühlung des zwischen innerer und äußerer Rohrwand (27, 28) ausgebildeten Abstandsspalts (29), kühlbar ist.

## Claims

1. Downpipe furnace for heating particulate material, in particular for expanding expandable particulate material such as perlite, comprising
- a downpipe (2) with a drop chamber (3) for the particulate material (4),
- a feeding device (7, 7') for the particulate material (4) arranged at the upper end (6) of the downpipe (2),
- a removal device (9, 9') for the particulate material (4) arranged at the bottom end (8) of the downpipe (2), and
- a heating device (10) surrounding the downpipe (2) at least over a partial length, by means of which the particulate material (4) passing through the downpipe can be heated by radiant heat (Q),
**characterized by**
- an evacuation device (24, 24') which is connected to the drop chamber (3) of the downpipe (2) so that the particulate material (4) passes through the drop chamber (3) during the heating process under negative pressure conditions of at least one rough vacuum of less than 300 mbar, wherein the feeding device (7; 7') is provided with an arrangement of at least one pressure-tight storage container (13.1, 13.2; 36).

2. Downpipe furnace according to claim 1, **characterized in that** the feeding device (7) and/or the removal device (9) each have a batch storage container (13.1, 13.2; 17.1, 17.2) which can be closed in a pressure-tight manner and which can also be placed under at least one rough vacuum with the aid of the evacuation device (24).

3. Downpipe furnace according to claim 2, **characterized in that** the batch storage container or container(s) (13.1, 13.2; 17.1, 17.2) is/are provided in their filler neck (21) and outlet neck (22) with pressure-tight closing shut-off flaps (23).

4. Downpipe furnace according to claim 2 or 3, **characterized in that** the feeding device (7) and the removal device (9) each have batch storage containers (13.1, 13.2; 17.1, 17.2) which are present in pairs and can be closed in a pressure-tight manner alternately in time in such a way that a quasi-continuous operation of the downpipe furnace (1) can be achieved by alternately feeding the one batch storage container (13.1, 13.2; 17.1, 17.2) and emptying the other batch storage container (13.1, 13.2; 17.1, 17.2) of the feeding and removal device (7, 9).

5. Downpipe furnace according to claim 3 and 4, **characterized in that** the drop chamber (3) of the downpipe furnace (1) as well as the batch storage containers (13.1, 13.2; 17.1, 17.2) can be connected independently of one another to the evacuation device (24) by selective control of the shut-off flaps (23).

6. Downpipe furnace according to any one of the preceding claims, **characterized in that** the feeding device (7) is provided with a metering device, in particular a rotary valve (16).

7. Downpipe furnace according to any one of the preceding claims, **characterized in that** a conveying device (19) for transporting away the particulate material (4) discharged by the removal device (9) is arranged downstream of the removal device (9).

8. Downpipe furnace according to claim 1, **characterized by** an ejector (59) at the bottom end of the downpipe (2) as a combined removal device (9') for continuously discharging the particulate material (4) and evacuation device (24') for putting the downpipe (2) under negative pressure.

9. Downpipe furnace according to claim 8, **characterized in that** the ejector (59) is operated by an air blower (62).

10. Downpipe furnace according to claim 8 or 9, **characterized in that** a water-cooled hopper (56) is arranged at the bottom end (8) of the downpipe (2).

11. Downpipe furnace according to claim 1 or any one of claims 8 to 10, **characterized in that** the feeding device (7') at the top end (6) of the downpipe (2) is a continuously operating screw conveyor (35) which transports the particulate material (4) from a storage container (36) into a metering device (37) at the top end (6) of the downpipe (2).

12. Downpipe furnace according to claim 11, **characterized in that** the storage container (36) can be closed by a lid (66), in particular for processing coarse particulate material.

13. Downpipe furnace according to claim 11 or 12, **characterized in that** the screw conveyor (35) and/or the conveying path from the storage container (36) to the screw conveyor (35) is provided at least over a partial length with a temperature control device (40, 45).

14. Downpipe furnace according to any one of claims 11 to 13, **characterized in that** the metering device (37) comprises a hopper (47) with a metering cone (53) rotatably driven therein and preferably adjustable in height.

15. Downpipe furnace according to any one of the preceding claims, **characterized in that** the heating device (10) is provided with selectively controllable heating sleeves (11) along the drop chamber (3).

16. Downpipe furnace according to any one of the preceding claims, **characterized in that** selectively controllable temperature control zones are associated with the downpipe (2) along the drop chamber (3).

17. Downpipe furnace according to any one of the preceding claims, **characterised in that** the evacuation device (24, 24') is designed in such a way that the drop chamber (3) and the optionally present batch storage container (13.1, 13.2; 17.1, 17.2) can be put under a negative pressure in the range from 300 mbar to 100 mbar.

18. Downpipe furnace according to any one of the preceding claims, **characterized in that** the downpipe (2) is at least partially made of glass material permeable to thermal radiation.

19. Downpipe furnace according to claim 17, **characterized in that** the downpipe (2) is double-walled with an inner pipe wall (27) consisting of the glass material permeable to thermal radiation and with an outer pipe wall (28), preferably also made of glass material, surrounding the inner pipe wall (27) at a distance.

20. Downpipe furnace according to claim 17 or 18, **characterized in that** the downpipe (2) can be cooled, in particular by cooling the gap (29) formed between the inner and outer pipe walls (27, 28).

## Revendications

1. Four à tubes de descente destiné à chauffer une matière particulaire, en particulier pour gonfler de la matière particulaire expansible, telle que la perlite, comprenant
- un tube de descente (2) avec un espace de descente (3) pour la matière particulaire (4),
- un dispositif d'alimentation (7, 7') pour la matière particulaire (4), disposé à l'extrémité supérieure (6) du tube de descente (2),
- un dispositif de prélèvement (9, 9') de la matière particulaire (4) disposé à l'extrémité inférieure (8) du tube de descente (2), et
- un dispositif de chauffage (10) entourant le tube de descente (2) au moins sur une longueur partielle, grâce auquel la matière particulaire (4) traversant l'espace de descente peut être chauffée par chaleur rayonnante (Q), **caractérisé par**
- un dispositif d'évacuation (24, 24') qui est relié à l'espace de descente (3) du tube de descente (2), de sorte que la matière particulaire (4) tombe à travers l'espace de descente (3) pendant le chauffage dans des conditions de pression négative d'au moins un vide grossier inférieur à 300 mbar, le dispositif d'alimentation (7 ; 7') étant pourvu d'un agencement d'au moins un réservoir de stockage étanche à la pression (13.1, 13.2 ; 36).

2. Four à tubes de descente selon la revendication 1, **caractérisé en ce que** le dispositif d'alimentation (7) et/ou le dispositif de prélèvement (9) présentent chacun un réservoir de stockage de charge (13.1, 13.2 ; 17.1, 17.2) pouvant être fermé de manière étanche à la pression, qui peut également être mis sous au moins un vide grossier à l'aide du dispositif d'évacuation (24).

3. Four à tubes de descente selon la revendication 2, **caractérisé en ce que** le ou les réservoir(s) de stockage de charge (13.1, 13.2 ; 17.1, 17.2) sont pourvus, dans leur tubulure de remplissage (21) et leur tubulure de sortie (22), de clapets d'arrêt (23) fermant de manière étanche à la pression.

4. Four à tubes de descente selon la revendication 2 ou 3, **caractérisé en ce que** le dispositif d'alimentation (7) et le dispositif de prélèvement (9) présentent chacun des paires de réservoirs de stockage de charge (13.1, 13.2 ; 17.1, 17.2) de telle sorte qu'un fonctionnement quasi-continu du four à tubes de descente (1) peut être obtenu en alimentant alternativement l'un des réservoirs de stockage de charge (13.1, 13.2 ; 17.1, 17.2) et en vidant l'autre réservoir de stockage de charge (13.1, 13.2 ; 17.1, 17.2) du dispositif d'alimentation et de prélèvement (7, 9).

5. Four à tubes de descente selon les revendications 3 et 4, **caractérisé en ce que,** par une commande sélective des clapets d'arrêt (23), l'espace de chute (3) du four à tubes de descente (1) ainsi que les réservoirs de stockage de charge (13.1, 13.2 ; 17.1, 17.2) peuvent être reliés indépendamment les uns des autres au dispositif d'évacuation (24).

6. Four à tubes de descente selon l'une quelconque des revendications précédentes, **caractérisé en ce que** le dispositif d'alimentation (7) est pourvu d'un dispositif de dosage, en particulier d'une vanne rotative (16).

7. Four à tubes de descente selon l'une quelconque des revendications précédentes, **caractérisé en ce que** le dispositif de prélèvement (9) est suivi d'un dispositif de transport (19) pour l'évacuation de la matière particulaire (4) délivrée par le dispositif de prélèvement (9).

8. Four à tubes de descente selon la revendication 1, **caractérisé par** un éjecteur (59) à l'extrémité inférieure du tube de descente (2) en tant que dispositif de prélèvement combiné (9') pour l'évacuation continue de la matière particulaire (4) et dispositif d'évacuation (24') pour mettre le tube de descente (2) en pression négative.

9. Four à tubes de descente selon la revendication 8, **caractérisé en ce que** l'éjecteur (59) est fait fonctionner par un souffleur d'air (62).

10. Four à tubes de descente selon la revendication 8 ou 9, **caractérisé en ce qu'**une trémie (56) refroidie par de l'eau est disposée à l'extrémité inférieure (8) du tube de descente (2).

11. Four à tubes de descente selon la revendication 1 ou l'une quelconque des revendications 8 à 10, **caractérisé en ce que** le dispositif d'alimentation (7') à l'extrémité supérieure (6) du tube de descente (2) est constitué d'un convoyeur à vis (35) fonctionnant en continu, qui transporte la matière particulaire (4) d'un réservoir de stockage (36) dans un dispositif de dosage (37) à l'extrémité supérieure (6) du tube de descente (2).

12. Four à tubes de descente selon la revendication 11, **caractérisé en ce que** le réservoir de stockage (36) peut être fermé par un couvercle (66), en particulier pour un traitement de matière particulaire grossière.

13. Four à tubes de descente selon la revendication 11 ou 12, **caractérisé en ce que** le convoyeur à vis (35) et/ou le trajet de transport du réservoir de stockage (36) au convoyeur à vis (35) est pourvu d'un dispositif de régulation de température (40, 45) au moins sur une longueur partielle.

14. Four à tubes de descente selon l'une quelconque des revendications 11 à 13, **caractérisé en ce que** le dispositif de dosage (37) présente une trémie de déversement (47) avec un cône de dosage (53) entraîné en rotation dans celle-ci, de préférence réglable en hauteur.

15. Four à tubes de descente selon l'une quelconque des revendications précédentes, **caractérisé en ce que** le dispositif de chauffage (10) est pourvu, le long de l'espace de descente (3), de manchettes de chauffage (11) pouvant être commandées de manière sélective.

16. Four à tubes de descente selon l'une quelconque des revendications précédentes, **caractérisé en ce que** des zones de régulation de température pouvant être commandées de manière sélective sont associées au tube de descente (2) le long de l'espace de descente (3).

17. Four à tubes de descente selon l'une quelconque des revendications précédentes, **caractérisé en ce que** le dispositif d'évacuation (24, 24') est conçu de telle sorte que l'espace de descente (3) et le réservoir de stockage de charge (13.1, 13.2 ; 17.1, 17.2) éventuellement présent peuvent être mis sous une pression négative dans la gamme de 300 mbar à 100 mbar.

18. Four à tubes de descente selon l'une quelconque des revendications précédentes, **caractérisé en ce que** le tube de descente (2) est constitué au moins en partie d'une matière vitreuse perméable au rayonnement thermique.

19. Four à tubes de descente selon la revendication 17, **caractérisé en ce que** le tube de descente (2) est réalisé à double paroi avec une paroi tubulaire intérieure (27) constituée de la matière vitreuse perméable au rayonnement thermique et avec une paroi tubulaire extérieure (28) entourant la paroi tubulaire intérieure (27) à distance, de préférence également en matière vitreuse.

20. Four à tubes de descente selon la revendication 17 ou 18, **caractérisé en ce que** le tube de descente (2) peut être refroidi, en particulier par refroidissement de la fente d'écartement (29) formée entre la paroi tubulaire intérieure et extérieure (27, 28).
